Europäisches Patentamt

European Patent Office

Office européen des brevets

(19)

(11) Publication number : **0 470 801 A1**

# (12) EUROPEAN PATENT APPLICATION

(21) Application number : **91307191.6**

(22) Date of filing : **05.08.91**

(51) Int. Cl.⁵ : **H04N 13/04, H04N 15/00**

(30) Priority : **06.08.90 US 563372**

(43) Date of publication of application :
**12.02.92 Bulletin 92/07**

(84) Designated Contracting States :
**DE ES FR GB IT NL**

(71) Applicant : **TEXAS INSTRUMENTS
INCORPORATED**
**13500 North Central Expressway**
**Dallas Texas 75265 (US)**

(72) Inventor : **Hatch, Gergory A.**
**6617 Greenwich Lane**
**Dallas, Texas 75230 (US)**
Inventor : **Williams, Rodney D.**
**2401 Evergreen**
**Plano, Texas 75075 (US)**
Inventor : **Spry, Larry W.**
**Deceased (US)**
Inventor : **Fisher, Thomas D.**
**1909 Leon Drive**
**Plano, Texas 75075 (US)**

(74) Representative : **Blanco White, Henry Nicholas
et al**
**ABEL & IMRAY Northumberland House**
**303-306 High Holborn**
**London WC1V 7LH (GB)**

(54) Apparatus and method for volume graphics display.

(57) Apparatus for real time volume graphics display is provided, which comprises a light source (110) for generating a light beam (111). Further included is a graphics processor (13) which receives graphics data and produces light beam modulation and positioning information therefrom. A modulator (19) is coupled to the graphics processor (13) for receiving the modulation information and modulating the intensity of the light beam (111) in response to the modulation information. A scanner (18) is coupled to the graphics processor (13) for receiving the positioning information to receive the modulated light beam and position the X and Y positions thereof in response to the positioning information. The modulated and positioned light beam intersects a rotating display surface and produces a volume display.

EP 0 470 801 A1

FIG. 1

TECHNICAL FIELD OF THE INVENTION

This invention relates in general to the field of image display systems. More particularly, the present invention relates to apparatus and method for volume graphics display.

RELATED APPLICATIONS

All of the following patent applications are cross-referenced to one another, and all have been assigned to Texas Instruments, Incorporated. These applications have been concurrently filed and are hereby incorporated in this patent application by reference.

Attorney
Docket #

| TI-15405 | A System and Method for Support and Rotation of an Object, Patent Application Serial Number 563,180; |
| TI-15406 | Linear Stepper Motor Design and Method of Operation, Patent Application Serial Number 563,238; |
| TI-15407 | Apparatus and Method for Volume Graphics Display, Patent Application Serial Number 563,372; |
| TI-15408 | Volume Display Development System, Patent Application Serial Number 563,374; and |
| TI-15409 | Volume Display Optical System and Method, Patent Application Serial Number 563,370. |

BACKGROUND OF THE INVENTION

Systems exist which modulate and/or scan a beam, such a a laser beam, and then project the scanned beam onto a screen. Examples of such display systems are described in Baker Patent Nos. 3,471,641 and 3,549,800.

There are also existing systems which provide a three dimensional display. Prior systems for creating such a display have involved moving a flat plate mirror or flexing a plastic mirror to reflect a CRT image in order to create a volume display. Similar techniques have employed a Mylar membrane stretched over a metal ring and silvered on the surface, such mirror being vibrated to reflect the information displayed on the CRT in synchronism with the mirror motion. Such techniques, and techniques for converting a cathode ray tube two dimensional display into a three dimensional image, are discussed in the article "Terminal Puts 3-Dimensional Graphics on Solid Ground", by Harry S. Stover, Electronics, July 28, 1961.

Conventional three dimensional display techniques such as described above are limited because in using CRT screens the produced image may be viewed only from a selected narrow range of angles. Moreover, such systems have generally not been able to produce images in real time and have been limited by the possible vibration frequencies of the screens. The use of vibrating mirrors has also created difficulties due to the relatively large mass of the mirrors which prevents substantial deflections.

Prior three dimensional display systems also lacked the ability to display images in real time. This capability becomes important in real time applications such as a three dimensional display of air traffic around and above an air field for the purpose of air traffic control.

Accordingly, a need has arisen for a three dimensional volume display system that can produce three dimensional images in real time.

## SUMMARY OF THE INVENTION

In accordance with the present invention, apparatus and a method for volume graphics display are provided which substantially eliminate or reduce disadvantages and problems associated with prior three dimensional display systems.

In one aspect of the present invention, apparatus for real time volume graphics display is provided, which comprises a light source for generating a light beam. Further included is a graphics processor which receives graphics data and produces light beam modulation and positioning information there-from. A modulator is coupled to the graphics processor for receiving the modulation information and modulating the intensity of the light beam in response to the modulation information. A scanner is coupled to the graphics processor for receiving the positioning information to receive the modulated light beam and position the X and Y positions thereof in response to the positioning information. The modulated and positioned light beam intersects a rotating display surface and produces a volume display.

In another aspect of the present invention, apparatus for real time volume display comprises a plurality of laser sources for generating a plurality of laser beams of various colors. A graphics processor receives graphics data and produces light beam modulation and positioning information therefrom. The modulation information is received by a plurality of modulators coupled to the graphics processor, where each modulator is positioned to receive one light beam and modulates the intensity thereof in response to the modulation information. The positioning information is received by a plurality of scanners coupled to the graphics processor, where each scanner is positioned to receive one modulated light beam and positions the X and Y positions thereof in response to said positioning information. A display surface is positioned to receive the modulated and positioned light beam.

In yet another aspect of the present invention, a method for volume display in real time comprises the steps of receiving graphics data and storing the graphics data in memory. A timing signal is produced in response to the rate of rotation of a display surface, which is used for synchronously supplying the graphics data. The laser beam is modulated in response to the graphics data, and the position of the laser beam is deflected in response to the graphics data. The laser beam is then intersected by the display surface to form a multi-color volume display.

An important technical advantage of the present invention provides apparatus and a method for generating a volume display in real time.

## BRIEF DESCRIPTION OF THE DRAWINGS

For a better understanding of the present invention, reference may be made to the accompanying drawings, in which:

FIG. 1 is a top level block diagram of a preferred embodiment of the present invention;

FIG. 2 is a more detailed block diagram of the present invention;

FIG. 3 is a flowchart describing the preferred embodiment of the volume display algorithm; and

Fig. 4 is a block diagram of a display list containing graphics data of at least one image according to the preferred embodiment of the present invention.

## DETAILED DESCRIPTION OF THE INVENTION

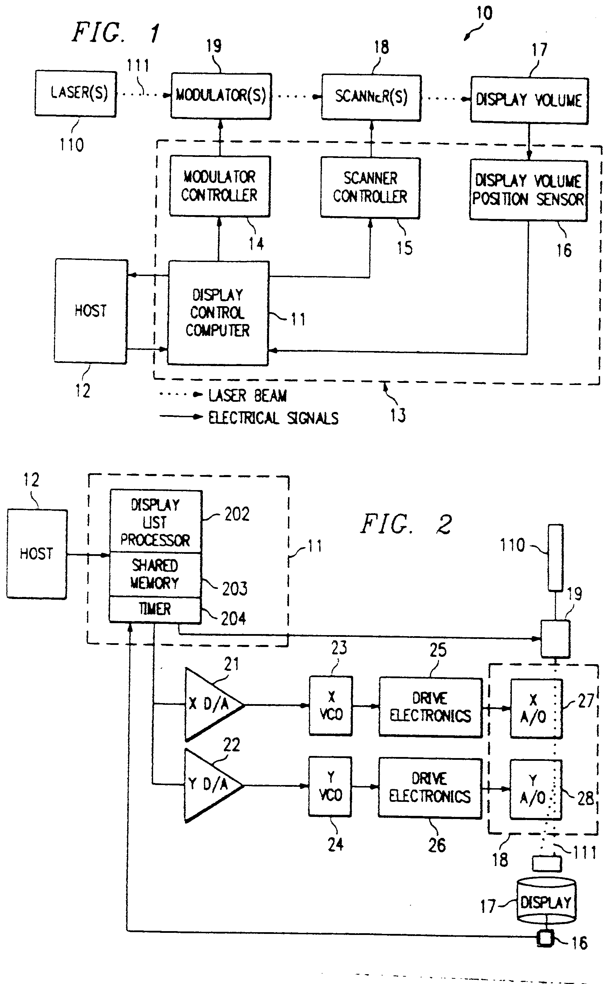

With reference to the drawings, FIG. 1 illustrates the apparatus for volume graphics display, indicated generally at 10 and constructed according to the teaching of the present invention. A host computer system 12 is coupled to a graphics processing system 13. Graphics processing system 13 includes several components, including a display control computer 11, which is coupled to a modulator controller 14 and a scanner controller 15.

Modulator controller 14 is further coupled to a modulator 19, and scanner controller 15 is coupled to a scanner 18. A laser 110 is positioned so that the laser beam 111 emitted therefrom passes through modulator 19 and scanner 18 and is projected onto a three dimensional display volume 17. A display volume position sensor 16 is coupled to display volume 17 and display control computer 11.

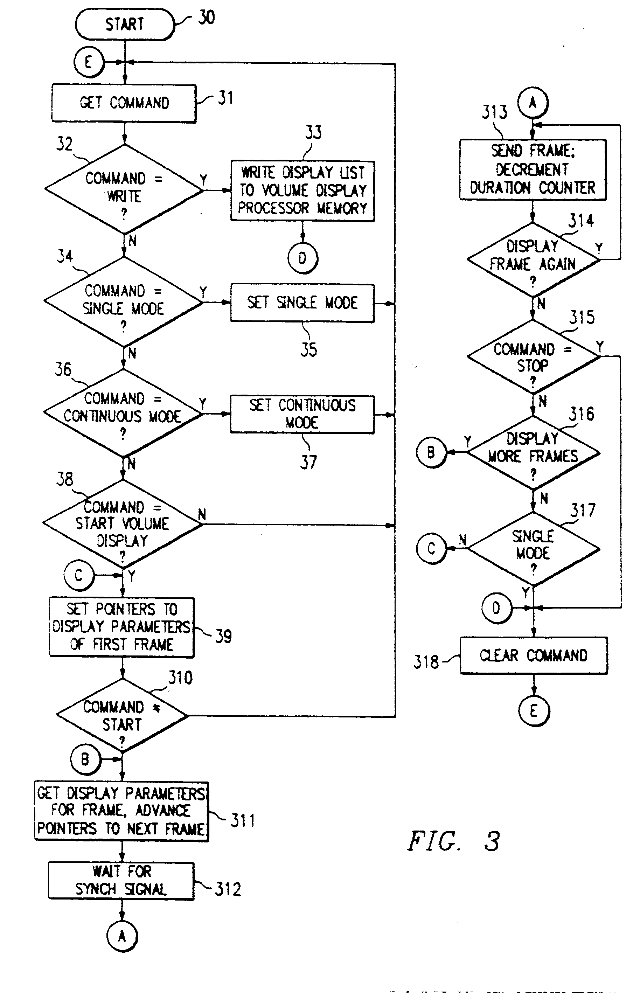

Referring to FIG. 2, a more detailed block diagram of the preferred embodiment of the invention is shown. Host computer 12 is coupled to display control computer 11, which includes a display list processor 202, a memory 203, and a timer 204. Coupled to display control computer 11 are X and Y digital to analog converters (D/A) 21 and 22, which are in turn coupled to X and Y voltage controlled oscillators (VCOs) 23 and 24. A pair of drive electronic circuits 25 and 26 are connected to VCO 23 and 24, respectively, and X and Y acousto-optic laser scanners (A/O) 27 and 28 are coupled to the output of drive electronic circuits 25 and 26. Scanners 27 and 28

4

are positioned to received a laser beam modulated by modulator 19 and emitted by laser source 110. Exemplary VCOs include VCO-200A manufactured by ISOMET Corporation of Springfield, Virginia. Drive electronic circuits 25 and 26 may be implemented with available circuits such as radio frequency (RF) power amplifiers and isolation amplification modules sold under part numbers RFA-108 and Ia-100 series, respectively, both manufactured by ISOMET Corporation. Exemplary acousto-optic scanners include the dual axis tellurium dioxide laser scanner also manufactured by ISOMET under the model number LS110-XY. It is important to note that VCOs 23 and 24 and drive electronics 25 and 26 are required in the present implementation due to the particular operating requirements of the acousto-optics scanner hardware 18 used, which requires input signals having radio frequencies. In alternate implementations, scanner hardware which does not require circuitry to generate radio frequency signals may be available.

The laser beam, after passing through modulator 19 and scanners 18, is projected onto display volume 17. Display volume 17 may be a rotating disk, the rotational speed thereof sensed by display volume position sensor 16. Display volume position sensor 16 is implemented in a manner consistent with the rotational motion driving means of display volume 17. The display volume 17 rotational position is sensed by sensor 16, which is coupled to display control computer 11.

In operation, a user may generate graphics data on host computer 12. The graphics data will be stored in the memory (not shown) of host computer 12 until three dimensional volume display is desired. The graphics data is downloaded into memory 203 of display control computer 11. The graphics data is synchronously sequenced through with respect to timing signals generated by timer 204 to provide modulation and position control information to modulator 19 and scanner 18. Modulator 19 modulates the intensity of laser beam 111 according to input from modulator controller 14.

X and Y positioning information are generated from the sequencing graphics data in display control computer 11 and are received by digital to analog converters 21 and 22, which convert the digital information to analog signals. The X and Y analog positioning signals are then supplied to voltage controlled oscillators 23 and 24. Oscillators 23 and 24 provide 30-130 MHz oscillation signals required to drive acousto-optic scanners 27 and 28. The oscillation signals are then supplied to drive electronic circuits 25 and 26, which amplify and further process the X and Y positioning signals prior to supplying them to scanners 27 and 28. Scanners 27 and 28 provide beam positioning in the X and Y axes, respectively, as the laser beam strikes three dimensional display volume 17. A three dimensional image is thus produced thereon in real time. Furthermore, feedback information on the position of display volume 17 is sensed by sensor 16 and relayed to display control computer 11.

It may be seen that the circuitry, as shown in FIGS. 1 and 2, may be expanded in a straightforward manner to accomplish a multi-colored three dimensional display. Graphics data will be generated and downloaded into display control computer 11, which includes modulation and positioning information of multiple laser beams. Additionally, multiple lasers emitting laser beams of different colors may be processed by additional modulators, voltage controlled oscillators, drive electronics, and scanners in a fashion similar to that shown in FIGS. 1 and 2.

Referring to FIG. 3, the graphics processing algorithm residing and executing in display control computer 11 starts in block 30. As shown in block 31, the algorithm begins by getting a command from a predetermined register (not shown) or address location, for example. The command may be issued by a user through a host interface (not shown) running on host computer 12, or it may be issued by a piece of software. The content of the command register is examined and compared to a WRITE command, as shown in block 32. If the command is WRITE, then a display list containing graphics data is written or downloaded from host computer 12 to a predetermined starting address location in graphics processor memory 203, as shown in block 33. The command register is then cleared, as shown in block 318. Execution returns to block 31.

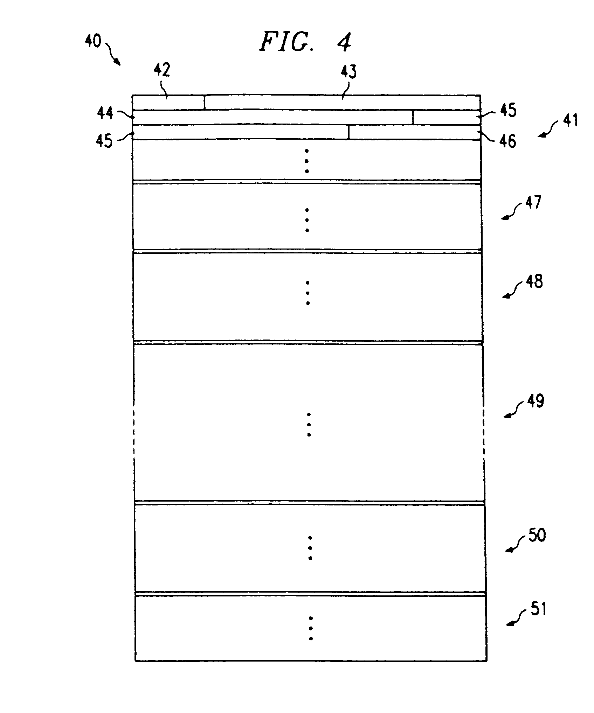

Referring to FIG. 4, a display list 40 may contain graphics data of one image or a sequence of multiple images. Display list 40 contains a header 41 which contains information such as the number of images or frames stored in display list 40. The number of frames in display list 40 is stored in the first position 42 of header 41. Memory spaces 43-46 subsequent to space 42 contain information on each frame such as the offset from the beginning of display list 40, the number of display points in each frame, and the display duration of each frame. Contiguous to header 41 are memory spaces 47-51 containing the points of each frames. The points, when displayed, make up the images.

If, upon examination of the command register, the command is not WRITE but SINGLE mode, as shown in block 34, then a MODE variable is set to reflect that single mode display is desired, as shown in block 35. If the command is CONTINUOUS mode, as shown in block 36, then in block 37 CONTINUOUS mode is set. SINGLE mode refers to a display option where the images or frames are displayed only once; CONTINUOUS mode refers to displaying the frames in the display list repetitiously. Execution returns to block 31 to await for additional commands.

If the command indicates that volume display is to be started, as shown in block 38, then pointers are assigned to the various display parameters of the first frame 47 contained in header 41 (FIG. 4), as shown in block 39. The pointers are set to point to, for example, the offset, the number of points, and the duration of display of frame 47 that are stored in memory space 43 in header 41. Subsesuently, the command is checked again in block 310 to ensure that the command has not been changed from START to an alternate command. If the command is still START, then the display parameters for the present frame is loaded into the program, and the pointers are advanced to point to the parameters for the next frame, as shown in block 311.

One of the signals produced by timer 204 shown in FIG. 2 is a SYNCH signal. The display must be timed with the SYNCH signal to ensure proper timing between image protection and the rotation of display volume 17. Therefore, as shown in block 312, execution waits for the SYNCH signal before proceeding to block 313, where the points of the present frame is sent to D/A 21 and 22 of FIG. 2. The duration of the present frame is checked, by means of a counter, for example, and if the count is not yet zero, the frame is displayed again, as shown in block 314. Otherwise, execution proceeds to block 315, where the command is checked to determine whether it is STOP. If the command is STOP, execution proceeds to block 318 where the command is cleared and the get command loop is entered again at block 31.

If the command is not STOP, then a determination is made as to whether more frames remain in display list 40 in block 316. If there is at least one more frame remaining in display list 40, then execution proceeds to block 311, where preparations are made for displaying that frame. Otherwise, the MODE variable is checked in block 317, if it indicates SINGLE mode, then execution proceeds to block 318, where the command is cleared and the get command loop is entered again. If the display mode is not SINGLE but CONTINUOUS, then execution proceeds to block 39, where the pointers are assigned to point to the parameters of the first frame again, and so on. In the manner described above, the points in a image frame are made available to circuit 10, and are also projected onto display volume 17 in real time.

It may be seen that the present invention may be expanded to include more than one laser source which emits multiple laser beams of various colors to compose a color image. Each laser beam will require a scanner to deflect it in two axes. Similarly, drive electronics, VCO and D/A for processing the data and driving the scanner of each axes are required for each laser beam. Additional modulators are required for additional laser sources.

## Preferred Embodiment Features

Various important features of the preferred embodiment are summarized below.

An apparatus for volume display is shown with a plurality of laser sources for generating a plurality of laser beams of various colors, a graphics processor for receiving graphics data and producing laser beam modulation and positioning information therefrom, a plurality of modulators coupled to the graphics processor for receiving the modulation information, each modulator positioned to receive one laser beam and modulating the intensity thereof in response to the modulation information, a plurality of scanners coupled to the graphics processor for receiving the positioning information, each scanner positioned to receive one modulated laser beam and positioning the X and Y positions thereof in response to the positioning information, and a display surface positioned for receiving the modulated and positioned laser beam.

This apparatus further includes a driving circuit coupled to each of the scanners for receiving the positioning information and producing therefrom signals to drive the scanners. Each of the scanners may comprise first and second acousto-optic scanning circuits for steering the laser beam in X and Y axes. Such apparatus may also include for each laser beam: first and second digital to analog converters for receiving the graphics data in the X and Y axes, respectively, and converting the graphics data froam digital to analog form as well as first and second voltage controlled oscillators coupled to the first and second digital to analog converters, respectively, for generating control signals for the scanner in the X and Y axes, wherein each of the scanners comprise first and second tellurium dioxide crystals for deflecting the laser beam in the X and Y axes. Moreover, the apparatus may further include a memory coupled to the graphics processor for storing the received graphics data and a timer coupled to the graphics processor for generating timing information, the timing information including a timing signal for synchronizing the production of laser beam modulation and positioning information with the rotation of the display surface wherein said graphics data containing frames of images is arranged as a display list in the memory, the display list having a header containing display parameters for each frame, the display list also containing a plurality of point data for each frame. Furthermore, the apparatus may include means for indexing the plurality of point data for each frame, means for retrieving the plurality of point data for each frame in response to the display parameters, and means for supplying the retrieved point data to the drive circuit in response to the timing signal.

An apparatus for generating a volume image with a laser beam on a display surface is shown including a memory, means for receiving graphics data and storing the graphics data in the memory, means for generating a timing signal correlative to the changing position of the display surface, means for supplying the graphics data synchronously with the timing signal, means for modulating the intensity of the laser beam in response to the supplied graphics data, means for deflecting the modulated laser beam in at least two axes in response to the supplied graphics data, and means for changing the position of the display surface, the display surface intersecting the modulated and deflected laser beam. Such apparatus may also include means for supplying graphics data associated with an image frame, means for continuously supplying the graphics data for the desired duration of the image frame, and means for applying the means for supplying and means for continuously supplying graphics data to another image frame. Moreover, such apparatus may also include means for storing a plurality of display parameters for each image frame, means for indexingthe graphics data for each image frame in response to the stored display parameters, means for retrieving the graphics data for each image frame, and means for supplying the retrieved graphics data in response to the timing signal. The modulating and deflecting means may comprise means for modulating the intensity of a plurality of laser beams in response to the supplied graphics data and means for deflecting each of the modulated laser beams in at least two axes in response to the supplied graphics data.

Although the present invention has been described in detail, it should be understood that various changes, substitutions and alterations can be made hereto without departing from the spirit and scope of the present invention as defined by the appended claims.

## Claims

1. Apparatus for volume graphics display, comprising:
   a light source for generating a light beam;
   a graphics processor for receiving graphics data, and producing light beam modulation and positioning information therefrom;
   a modulator coupled to said graphics processor for receiving said modulation information, said modulator positioned to receive said light beam and modulating the intensity thereof in response to said modulation information;
   a scanner coupled to said graphics processor for receiving said positioning information, said scanner positioned to received said modulated light beam and positioning the X and Y positions thereof in response to said positioning information; and
   a rotating display surface positioned for receiving said modulated and positioned light beam.

2. The apparatus, as set forth in claim 1, further comprising a driving circuit coupled to said scanner for receiving said positioning information and producing therefrom signals to drive said scanner.

3. The apparatus, as set forth in claim 1, wherein said scanner comprises first and second acousto-optic scanning circuits for steering said light beam in X and Y axes.

4. The apparatus, as set forth in claim 1, further comprising:
   first and second digital to analog converters for receiving said graphics data in the X and Y axes, respectively, and converting said graphics data from digital to analog form; and
   first and second voltage controlled oscillators coupled to said first and second digital to analog converters, respectively, for generating control signals for raid scanner in the X and Y axes.

5. The apparatus, as set forth in claim 4, wherein said scanner comprises first and second tellurium dioxide crystals for deflecting said light beam in the X and Y axes.

6. The apparatus, as set forth in claim 1, further comprising:
   a memory coupled to said graphics processor for storing said received graphics data; and
   a timer coupled to said graphics processor for generating timing information, said timing information including a timing signal for synchronizing said production of light beam modulation and positioning information with the rotation of said display surface.

7. The apparatus, as set forth in claim 6, wherein said graphics data containing frames of images is arranged as a display list in said memory, said display list having a header containing display parameters for each frame, said display list also containing a plurality of point data for each frame.

7

8. The apparatus, as set forth in claim 7, further comprising:

means for indexing said plurality of point data for each frame;

means for retrieving said plurality of point data for each frame in response to said display parameters; and means for supplying said retrieved point data to said drive circuit in response to said timing signal.

9. The apparatus, as set forth in claim 1, wherein said light source is a laser source for generating a laser beam.

10. The apparatus, as set forth in claim 1, comprising a plurality of light sources generating a plurality of light beams.

11. The apparatus, as set forth in claim 10, wherein said plurality of light beams are of different colors.

12. A method for volume display in real time, comprising the steps of:

receiving graphics data and storing said graphics data in a memory;

generating a timing signal correlative to the changing position of a display surface;

supplying said graphics data synchronously with said timing signal;

modulating the intensity of a laser beam in response to said supplied graphics data;

deflecting said modulated laser beam in at least two axes in response to said supplied graphics data; and

changing the position of said display surface, said display surface intersecting said modulated and deflected laser beam.

13. The method, as set forth in claim 12, further comprising the steps of:

supplying graphics data associated with an image frame; continuously supplying said graphics data for the desired duration of said image frame; and

repeating said above two steps for another image frame.

14. The method, as set forth in claim 13, further comprising the steps of:

storing a plurality of display parameters for each image frame;

indexing said graphics data for each image frame in response to said stored display parameters;

retrieving said graphics data for each image frame; and supplying said retrieved graphics data in response to said timing signal.

15. The method, as set forth in claim 12, wherein said modulating and deflecting steps comprises the steps of:

modulating the intensity of a plurality of laser beams in response to said supplied graphics data; and

deflecting each said modulated laser beams in at least two axes in response to said supplied graphics data.

EP 0 470 801 A1

FIG. 1

FIG. 2

9

START 30

E

GET COMMAND 31

32
COMMAND = WRITE ? — Y → WRITE DISPLAY LIST TO VOLUME DISPLAY PROCESSOR MEMORY 33 → D

N

34
COMMAND = SINGLE MODE ? — Y → SET SINGLE MODE 35

N

36
COMMAND = CONTINUOUS MODE ? — Y → SET CONTINUOUS MODE 37

N

38
COMMAND = START VOLUME DISPLAY ? — N →

C → Y

SET POINTERS TO DISPLAY PARAMETERS OF FIRST FRAME 39

310
COMMAND ≠ START ?

B → 

GET DISPLAY PARAMETERS FOR FRAME, ADVANCE POINTERS TO NEXT FRAME 311

WAIT FOR SYNCH SIGNAL 312

A

313 A

SEND FRAME; DECREMENT DURATION COUNTER

314
DISPLAY FRAME AGAIN ? — Y

N

315
COMMAND = STOP ? — Y

N

316
DISPLAY MORE FRAMES ? — Y → B

N

317
SINGLE MODE ? — N → C

Y

D

CLEAR COMMAND 318

E

FIG. 3

FIG. 4

European Patent
Office

**EUROPEAN SEARCH REPORT**

Application Number

| | DOCUMENTS CONSIDERED TO BE RELEVANT | | EP 91307191.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | EP - A2 - 0 310 928<br>(TEXAS INSTRUMENTS)<br> * Abstract; fig. 2 *<br>-- | 1,2,4,<br>9,12 | H 04 N 13/04<br>H 04 N 15/00 |
| A | US - A - 4 871 231<br>(GARCIA)<br> * Abstract; fig. 1 *<br>-- | 1,9,<br>10,11,<br>12,15 | |
| A | US - A - 4 922 336<br>(MORTON)<br> * Abstract; fig. 1; column 6,<br>line 17 - column 10, line 7 *<br>-- | 1,12 | |
| A | US - A - 4 763 280<br>(ROBINSON)<br> * Abstract; fig. 1 *<br>---- | 1,12 | |
| | | | TECHNICAL FIELDS<br>SEARCHED (Int. Cl.5) |
| | | | H 04 N 9/00<br>H 04 N 13/00<br>H 04 N 15/00<br>G 02 B 27/00<br>G 06 F 15/00 |

The present search report has been drawn up for all claims

| Place of search | Date of completion of the search | Examiner |
|---|---|---|
| VIENNA | 22-10-1991 | BENISCHKA |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P0401)